(19) Europäisches Patentamt
European Patent Office
Office européen des brevets

(11) **EP 4 336 410 A1**

(12) **EUROPEAN PATENT APPLICATION**

(43) Date of publication:
**13.03.2024 Bulletin 2024/11**

(21) Application number: **23154883.5**

(22) Date of filing: **03.02.2023**

(51) International Patent Classification (IPC):
**G06N 3/0464** (2023.01)   **G06N 3/063** (2023.01)
**G06T 1/00** (2006.01)   **G06F 11/00** (2006.01)

(52) Cooperative Patent Classification (CPC):
**G06N 3/0464; G06N 3/063;** G06F 11/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 IN 202211051646**

(71) Applicant: **HCL Technologies Limited**
**New Delhi 110019 (IN)**

(72) Inventors:
• **Balasubramaniyan, Prasanna Venkatesh**
**600119 Chennai (IN)**
• **Gopalakrishnan, Sainarayanan**
**600119 Chennai (IN)**
• **Rajagopal, Gunamani**
**600119 Chennai (IN)**

(74) Representative: **Studio Torta S.p.A.**
**Via Viotti, 9**
**10121 Torino (IT)**

(54) **METHOD AND SYSTEM FOR FEATURE EXTRACTION USING RECONFIGURABLE CONVOLUTIONAL CLUSTER ENGINE IN IMAGE SENSOR PIPELINE**

(57)   The invention relates to method and system for feature extraction from an input image from a plurality of images in an image sensor pipeline. The method includes determining a number of logical convolutional operations to be performed, within a reconfigurable convolutional cluster engine, based on a size of an input feature map corresponding to the input image; performing a set of concurrent row wise convolutions on the input feature map, based on the number of logical convolutional operations; performing at least one of a maximum pooling or an average pooling operation on the set of corresponding convolution output through one or more pooling elements to generate a set of pooling output; and generating an output feature map based on the set of pooling output.

FIG. 2

**EP 4 336 410 A1**

**Description**

**TECHNICAL FIELD**

Generally, the invention relates to Convolutional Neural Networks (CNNs). More specifically, the invention relates to a method and system for feature extraction from an input image from a plurality of images in an image sensor pipeline.

**BACKGROUND**

An Image Signal Processing (ISP) chipset is a type of media processor used for image processing, in digital cameras, smartphones, or other devices. In recent times, advancement in ISP chipsets has been noticed to a greater extent by incorporating different image qualities and stabilization algorithms with the ISP pipeline blocks. The ISP chipsets play a vital role in building various computer vision solutions. Recent trends in Edge Computing Application have enabled edge devices to perform real-time tasks at silicon level. Artificial Intelligence (AI) at an edge device-level is more promising when real-time on-the-fly data analytics is required. Further, solutions are attained with the AI-enabled edge devices in many real-world applications such as in automotive (for example, driver/passenger monitoring and fleet management), portable medical devices (for example, diagnostic kits), video surveillance (for example, retail segments and warehouse management), and aerospace (for example, in-cabin monitoring) domains.

To address the high computational requirements of Deep Neural Networks (DNNs), Convolution Neural Network (CNN) accelerators are more prominent due to their scalable architecture to accommodate a greater number of low-middle-high level features. Moreover, a CNN preserves a spatial relationship between pixels by convolution operations, and features are auto learned from training samples in the CNN. Further, in the field of computer vision, CNNs are used for versatile applications that may require low power and compute-intensive solutions.

Hardware-accelerated CNN engines are gaining momentum in image sensor pipeline. The hardware-accelerated CNN engines help in feature extraction and handle massive computation-intensive operations (for example, mathematical operations) along with performance v/s power trade-off scenarios. When the solutions are deployed for safety critical or mission critical applications (i.e., for medical, aerospace, or automotive applications), incorporating the functional safety mechanisms with diagnostics features at the silicon level becomes essential. The functional safety mechanisms support in handling the real-time faults such as Single Event Upset (SEU), and Single Event Transition (SET) faults due to EMI, or other radiation effects (according to the device FIT and Grade). The functional safety mechanisms help in diagnosing the failure and achieving the safety compliance.

In the present state of art, various CNN accelerators are available for feature extraction. However, conventional CNN accelerators lack in providing full parallel and reconfigurable 2D/3D convolution, concurrent feature map processing with layer combine option, convolution compute element with integrated safety mechanism and BIST, support for dilation convolution, configurable pooling logic which may be hooked closely to leaf level compute element, on demand fast convolution when number of filters are large or when solution need more performance, near memory compute for convolution accelerator and localized kernel memory, reuse of the level convolution element for various kernel size, integrated 1D multiplication by reusing the leaf level convolution element, grouping of convolution accelerator to handle multiple input feature maps for increased performance, and scalable and flexible hardware accelerator to support for performance v/s power trade-off based on host configuration.

There is, therefore, a need in the present state of art for CNN accelerators capable of handling computationally complex tasks while ensuring less power consumption.

**SUMMARY**

In one embodiment, a method for feature extraction from an input image from a plurality of images in an image sensor pipeline is disclosed. The method may include determining a number of logical convolutional operations to be performed, within a reconfigurable convolutional cluster engine, based on a size of an input feature map corresponding to the input image. The method may further include performing a set of concurrent row wise convolutions on the input feature map, based on the number of logical convolutional operations. It should be noted that each of the set of concurrent row wise convolutions may include a set of convolution operations corresponding to a pre-determined kernel size so as to generate a set of corresponding convolution output. Further, each of the set of convolution operations may be one of a one-dimensional (1D) convolution, a two-dimensional (2D) convolution, or a three-dimensional (3D) convolution. Moreover, each of the set of convolution operations may be at least one of a dilation convolution, a fast convolution, or a functional safety convolution based on a user-defined configuration of the reconfigurable convolutional cluster engine. The method may further include performing at least one of a maximum pooling or an average pooling operation on the set of corresponding convolution output through one or more pooling elements to generate a set of pooling output. The method may further include generating an output feature map based on the set of pooling output. At least one of the output feature map or the input image is transmitted, based on a user-defined mode, for subsequent storage or processing prior to performing feature extraction from a next input image from the plurality of images in the image sensor pipeline.

In another embodiment, a system for feature extraction from an input image from a plurality of images in an image sensor pipeline is disclosed. The system may include a processor and a memory communicatively coupled to the processor, which, on execution, may cause the processor to determine a number of logical convolutional operations to be performed, within a reconfigurable convolutional cluster engine, based on a size of an input feature map corresponding to the input image. The processor-executable instructions, on execution, may further cause the processor to perform a set of concurrent row wise convolutions on the input feature map, based on the number of logical convolutional operations. It should be noted that each of the set of concurrent row wise convolutions may include a set of convolution operations corresponding to a pre-determined kernel size so as to generate a set of corresponding convolution output. Further, each of the set of convolution operations may be one of a 1D convolution, a 2D convolution, or a 3D convolution. Moreover, each of the set of convolution operations may be at least one of a dilation convolution, a fast convolution, or a functional safety convolution based on a user-defined configuration of the reconfigurable convolutional cluster engine. The processor-executable instructions, on execution, may further cause the processor to perform at least one of a maximum pooling or an average pooling operation on the set of corresponding convolution output through one or more pooling elements to generate a set of pooling output. The processor-executable instructions, on execution, may further cause the processor to generate an output feature map based on the set of pooling output. At least one of the output feature map or the input image is transmitted, based on a user-defined mode, for subsequent storage or processing prior to performing feature extraction from a next input image from the plurality of images in the image sensor pipeline.

In yet another embodiment, a non-transitory computer-readable medium storing computer-executable instruction for feature extraction from an input image from a plurality of images in an image sensor pipeline is disclosed. The stored instructions, when executed by a processor, may cause the processor to perform operations including determining a number of logical convolutional operations to be performed, within a reconfigurable convolutional cluster engine, based on a size of an input feature map corresponding to the input image. The operations may further include performing a set of concurrent row wise convolutions on the input feature map, based on the number of logical convolutional operations. It should be noted that each of the set of concurrent row wise convolutions may include a set of convolution operations corresponding to a pre-determined kernel size so as to generate a set of corresponding convolution output. Further, each of the set of convolution operations may be one of a 1D convolution, a 2D convolution, or a 3D convolution. Moreover, each of the set of convolution operations may be at least one of a dilation convolution, a fast convolution, or a functional safety convolution based on a user-defined configuration of the reconfigurable convolutional cluster engine. The operations may further include performing at least one of a maximum pooling or an average pooling operation on the set of corresponding convolution output through one or more pooling elements to generate a set of pooling output. The operations may further include generating an output feature map based on the set of pooling output. At least one of the output feature map or the input image is transmitted, based on a user-defined mode, for subsequent storage or processing prior to performing feature extraction from a next input image from the plurality of images in the image sensor pipeline.

It is to be understood that both the foregoing general description and the following detailed description are exemplary and explanatory only and are not restrictive of the invention, as claimed.

## BRIEF DESCRIPTION OF THE DRAWINGS

The present application can be best understood by reference to the following description taken in conjunction with the accompanying drawing figures, in which like parts may be referred to by like numerals

FIG. 1 illustrates a Convolutional Neural Network (CNN) acceleration device configured for feature extraction in an image sensor pipeline, in accordance with some embodiments of the present disclosure.

FIG. 2 illustrates a system for feature extraction using the CNN acceleration device in the image sensor pipeline, in accordance with some embodiments of the present disclosure.

FIGS. 3A-3C illustrate various Mini Parallel Rolling Engines (MPREs) within a reconfigurable convolutional cluster engine of an exemplary CNN acceleration device, in accordance with some embodiments of the present disclosure.

FIGS. 4 illustrates an exemplary parallel feature map processing in the reconfigurable convolutional cluster engine, in accordance with some embodiments of the present disclosure.

FIGS. 5 illustrates logical connection between Convolution Multiply and Accumulate-XtendedGen2 (CMAC-XG2) elements and pooling (CPOOL) elements, in accordance with some embodiments of the present disclosure.

FIG. 6 illustrates an exemplary table for determining approximate processing time for a six layered CNN network while using the CNN acceleration device, in accordance with some embodiments of the present disclosure.

FIGS. 7 illustrates a flowchart of an exemplary process of feature extraction from an input image from a plurality of images in an image sensor pipeline, in accordance with some embodiments of the present disclosure.

FIG. 8 is a block diagram of an exemplary computer system for implementing embodiments consistent with the present disclosure.

## DETAILED DESCRIPTION OF THE DRAWINGS

The following description is presented to enable a person of ordinary skill in the art to make and use the invention and is provided in the context of particular applications and their requirements. Various modifications to the embodiments will be readily apparent to those skilled in the art, and the generic principles defined herein may be applied to other embodiments and applications without departing from the spirit and scope of the invention. Moreover, in the following description, numerous details are set forth for the purpose of explanation. However, one of ordinary skill in the art will realize that the invention might be practiced without the use of these specific details. In other instances, well-known structures and devices are shown in block diagram form in order not to obscure the description of the invention with unnecessary detail. Thus, the present invention is not intended to be limited to the embodiments shown, but is to be accorded the widest scope consistent with the principles and features disclosed herein.

While the invention is described in terms of particular examples and illustrative figures, those of ordinary skill in the art will recognize that the invention is not limited to the examples or figures described. Those skilled in the art will recognize that the operations of the various embodiments may be implemented using hardware, software, firmware, or combinations thereof, as appropriate. For example, some processes can be carried out using processors or other digital circuitry under the control of software, firmware, or hard-wired logic. (The term "logic" herein refers to fixed hardware, programmable logic and/or an appropriate combination thereof, as would be recognized by one skilled in the art to carry out the recited functions). Software and firmware can be stored on computer-readable storage media. Some other processes can be implemented using analog circuitry, as is well known to one of ordinary skill in the art. Additionally, memory or other storage, as well as communication components, may be employed in embodiments of the invention.

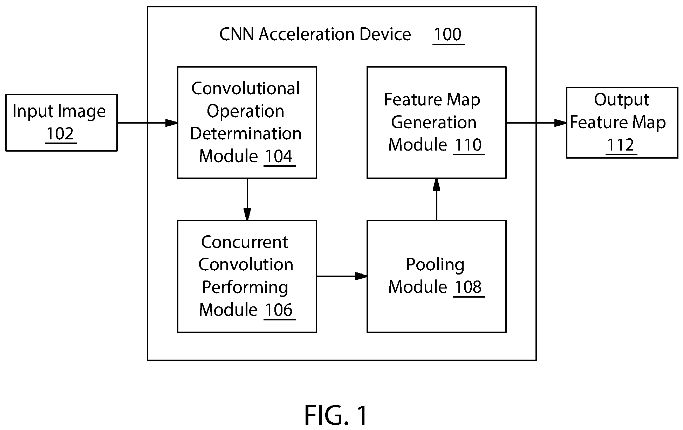

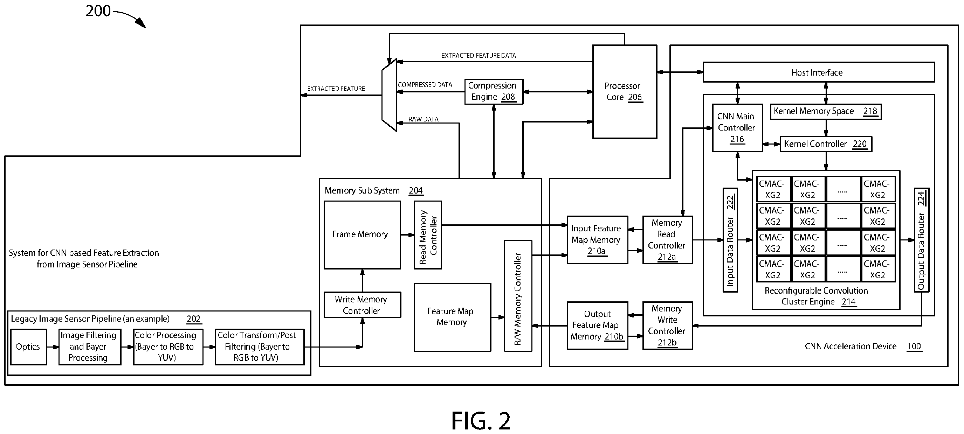

Referring now to FIG. 1, a Convolutional Neural Network (CNN) acceleration device 100 configured for feature extraction in an image sensor pipeline is illustrated, in accordance with some embodiments of the present disclosure. The CNN acceleration device 100 may perform a concurrent row wise convolution on an input image 102 received from a camera sensor pipeline with functional safety mechanisms to support functional safety faults such as Single Event Upset (SEU) or Single Event Transition (SET) faults. The CNN acceleration device 100 allows feature extraction, using Mini Parallel Rolling Engines (MPREs) built with multiple instances of Convolution Multiply and Accumulate-XtendedGen2 (CMAC-XG2) engine with localized kernel memory space. This may be explained further in conjunction with FIGS. 2-7. As illustrated in FIG. 1, in some embodiments, the CNN acceleration device 100 may include a convolutional operation determination module 104, a concurrent convolution performing module 106, a pooling module 108, a feature map generation module 110. Further, the CNN acceleration device 100 may also include a data store (not shown in FIG. 1) in order to store intermediate results generated by the modules 104-110.

The convolutional operation determination module 104 may be configured to determine a number of logical convolutional operations to be performed, within a reconfigurable convolutional cluster engine. The CNN acceleration device 100 may be associated with the reconfigurable convolutional cluster engine. In some embodiments, the CNN acceleration device 100 may include the reconfigurable convolutional cluster engine. It should be noted that the convolutional operation determination module 104 may determine the number of logical convolutional operations based on a size of an input feature map corresponding to the input image 102. The convolutional operation determination module 104 may be communicatively coupled to the concurrent convolution performing module 106.

The concurrent convolution performing module 106 may be configured to perform a set of concurrent row wise convolutions on the input feature map. In some embodiments, the concurrent convolution performing module 106 may include a set of MPREs to perform the set of concurrent row wise convolutions. The set of concurrent row wise convolutions may be performed based on the number of logical convolutional operations. It should be noted that each of the set of concurrent row wise convolutions may include a set of convolution operations corresponding to a pre-determined kernel size so as to generate a set of corresponding convolution output. Also, it should be noted that each of the set of convolution operations may be one of a one-dimensional (1D) convolution, a two-dimensional (2D) convolution, or a three-dimensional (3D) convolution. Each of the set of convolution operations may be at least one of a dilation convolution, a fast convolution, or a functional safety convolution based on a user-defined configuration of the reconfigurable convolutional cluster engine.

The user-defined configuration, for the dilation convolution, may include a dilation rate of the input feature map. The fast convolution may include employing a convolution grid engine (CGRID), and the functional safety convolution may include enabling at least one of a double-module redundancy (DMR), a triple-module redundancy (TMR), and one or more diagnostic features.

In some other embodiments, the reconfigurable convolution cluster engine may include a set of MPREs. Each MPRE may be configured to perform the concurrent row wise convolution operation on the input feature map. The number of MPRE may be based on a number of lines in the input feature map. Each of the set of MPREs may include a set of Convolution Multiply and Accumulate-XtendedGen2 (CMAC-XG2) elements. Further each CMAC-XG2 may be configured to perform a convolution operation corresponding to the pre-determined kernel size. The number of CMAC-XG2 may be based on a number of pixels in each of the line in the input feature map.

Further, each of the set of CMAC-XG2 may include at least one of a Double Module Redundancy (DMR) or a Triple-Module Redundancy (TMR). In some embodiments, the each of the set of CMAC-XG2 may be validated through safety diagnostics registers and Built-In Self-Test (BIST).

In some embodiments, the reconfigurable convolution cluster engine may include an input feature map memory to store the input image 102 and an output feature map memory to store the output feature map. Further, the reconfigurable convolution cluster engine may also include a kernel memory space capable for holding a set of network parameters associated to a network layer. Additionally, the reconfigurable convolution cluster engine may include a kernel controller to enable the parallel convolution operation by loading the network parameters into the one or more CMAC-XG2 elements simultaneously. Further, as illustrated in FIG. 1, the concurrent convolution performing module 106 may be communicatively coupled to the pooling module 108.

The pooling module 108 may be configured for performing at least one of a maximum pooling or an average pooling operation on the set of corresponding convolution output. The pooling module 108 may include one or more pooling (CPOOL) elements to generate a set of pooling output. The pooling module 108 may be operatively coupled to the feature map generation module 110.

The feature map generation module 110 may be configured to generate an output feature map 112 based on the set of pooling output. At least one of the output feature map or the input image is transmitted, based on a user-defined mode, for subsequent storage or processing prior to performing feature extraction from a next input image from the plurality of images in the image sensor pipeline.

Referring now to FIG. 2, a system 200 for feature extraction using the CNN acceleration device 100 in the image sensor pipeline is illustrated, in accordance with some embodiments of the present disclosure. FIG. 2 is explained in conjunction with FIG.1. The system 200 may include the CNN acceleration device 100, an exemplary legacy image sensor pipeline 202, a memory sub-system 204, a processor core 206, and a compression engine 208. The legacy image sensor pipeline 202 may include optics, image filtering and Bayer processing, and post filtering. Further, output of the legacy image sensor pipeline 202 may be transmitted to the memory sub-system 204. The memory sub system 204 may include a write memory controller, a frame memory, a read memory controller, a feature map memory, and a read-write controller. The memory sub-system 204 may be operatively connected to the CNN acceleration device 100, the processor core 206, and the compression engine 208.The CNN acceleration device 100 may include an input feature map memory 210a, an output feature map memory 210b, a memory read controller 212a, a memory write controller 212b, a main controller 216, a kernel memory space 218, a kernel controller 220, an input data router 222, an output data router, a reconfigurable convolution cluster engine 214, and a host interface.

The CNN acceleration device 100 may include the reconfigurable convolution cluster engine 214 for performing two dimensional (2D) and/or three-dimensional 3D convolutions in parallel on an entire input image/input feature map and may fit into to the image sensor pipeline for feature extraction. In some embodiments, the CNN acceleration device 100 may also be referred to as ICoS_NOVA. The reconfigurable convolution cluster engine 214 may include a plurality of MPREs which further includes a set of Convolution Multiply and Accumulate-XtendedGen2 (CMAC-XG2) elements to handle multiple feature maps and perform convolutions for various kernel sizes and depths. The kernel sizes may be, but are not limited to, '3x3', '5x5', '7x7' and '9x9'. Configurable pooling block for various size (for example: 2x2 or 3x3) may also be supported in the system 200. Various modules of the CNN acceleration device 100 may help in performing the parallel 3D convolution or dilated convolution, and feature map extraction on the image sensor pipeline.

It should be noted, there may be multiple instances of CMAC-XG2 to perform concurrent convolution on the entire input feature map, based on image size, performance, and power requirements. The CMAC-XG2 engine performs convolution and multiple CMAC-XG2 elements form an MPRE perform parallel row wise convolution operation on the feature map. In some embodiments, according to requirements, CNN architecture, and complexity, multiple reconfigurable convolution cluster engines may be instantiated to compute the convolution operations faster on the input image/the feature map plane. Also, the system 200 enables to reuse the compute resources efficiently (i.e., DSP, registers, and memory block).

The host processor (processor core) 206 may be an on-chip processor (for example, an Advanced RISC Machine (ARM) or Reduced Instruction Set Computer Five (RISC-V) processor Core). The host processor (processor core) 206 performs primary scheduling task and parameter loading for the reconfigurable convolution cluster engine. In some embodiments, the host processor (processor core) 206 may shut-off one or multiple selected CMAC-XG2 elements and activate parallel dense Matrix computation (1D processing). The input image (for example, may be of RGB or Y component) may be stored in the on-chip memory subsystem and this data get stored in the input feature map memory 21 0a. The output feature extracted image data get stored in the output feature map memory 210b. The input feature map memory (input line buffer) 210a and output feature map memory (output line buffer) 210b may hold single or multiple image/feature map data. The host processor (processor core) 206 may schedule the data to the input line buffer based on current layer processing. The kernel memory space 218 may act as a local cache memory and hold the entire network parameters such as kernel values, BIAS, and the like. The main controller 216 interfaced with the processor core 206 via the host interface, stores the necessary network layer information, and further acts as local control unit for the CMAC-XG2, memory controller, kernel memory space 218, pooling, input/output routers 222, 224, and read/write controllers 212a, 212b.

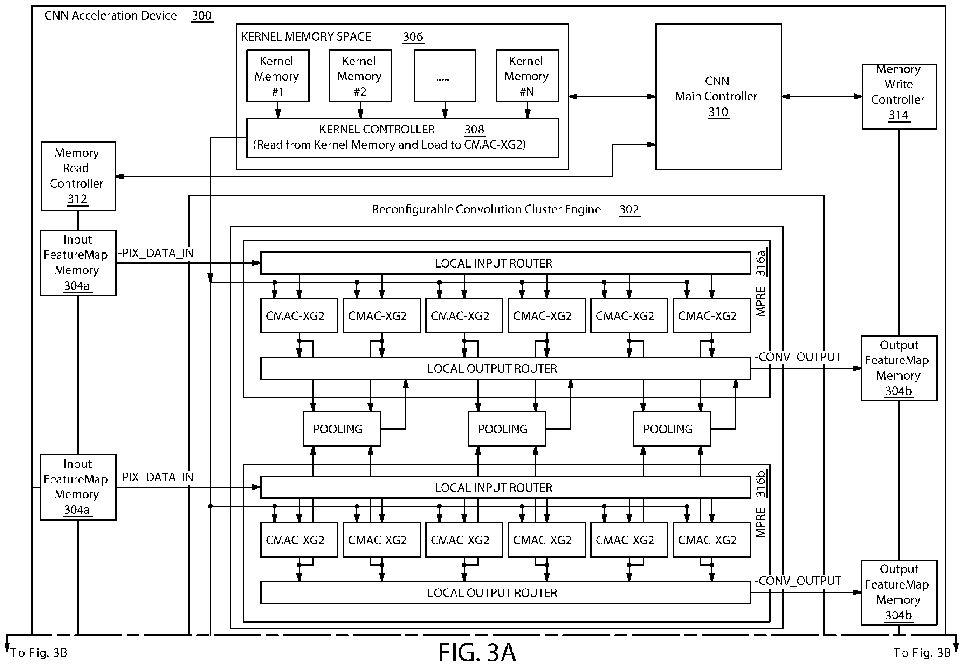

Referring now to FIGS. 3A-3C, various MPREs 316 within a reconfigurable convolutional cluster engine 302 of an exemplary CNN acceleration device 300 are illustrated, in accordance with some embodiments of the present disclosure. FIGS. 3A-3C are explained in accordance with FIG. 1-2. The CNN acceleration device 300 is analogous to the CNN acceleration device 100. The CNN acceleration device 300 may include the reconfigurable convolutional cluster engine 302, an input feature map memory 304a, an output feature map memory 304b, a kernel memory space 306, a kernel controller 308, a CNN main controller 310, a memory read controller 312, and a memory write controller 314.

Further, the reconfigurable convolutional cluster engine 302 may include the MPREs 316 (for example, MPRE 316a to MPRE 316n). Each of the MPREs 316 may include a plurality of CMAC-XG2 instances, configurable pooling (CPOOL) elements, a local input router and a local output router. A number of CMAC-XG2 elements in the MPREs may be decided based on maximum image size.

By way of an example, an image size of 800 X 480 (W X H) from the sensor pipeline may be used for feature extraction. In such case the number of CMAC-XG2 may be 800 X 480 = 3,84,000. Thus, each MPRE may have 800 CMAC-XG2 elements and for the parallel row processing there may be maximum 480 MPRE instances.

Further, the kernel memory space 306 may be same as the kernel memory space 218 of FIG. 2 which may act as a local memory and may hold the network parameters (such as, kernel value, BIAS, etc.) for the CNN network of the CNN acceleration device 300. The kernel controller 308 loads the network parameters into all CMAC-XG2 elements simultaneously to enable the parallel convolution operation. Each CMAC-XG2 element internally includes local pixel memory and kernel memory. Therefore, the convolution with multiply and accumulation (MAC) may be done seamlessly.

In some embodiments, the convolution operation may be a dilation convolution. When the main CNN controller 310 enables a dilation convolution mode and dilation rate, the CMAC_XG2 local controller may schedule the data to the MAC from the local pixel memory. Further, in some other embodiments, the convolution operation may be a fast convolution. When the CNN main controller 310 enables a fast convolution mode, a convolution grid engine may be activated and full parallel convolution may be done in each of the CMAC-XG2 elements. In some embodiments, the convolution operation may be a functional safety convolution. When the CNN main controller enables a functional safety mode based on user settings, the CMAC-XG2 get configured to support functional safety mechanism like Double Module Redundancy (DMR) or Triple-Module Redundancy (TMR), and safety diagnostics registers.

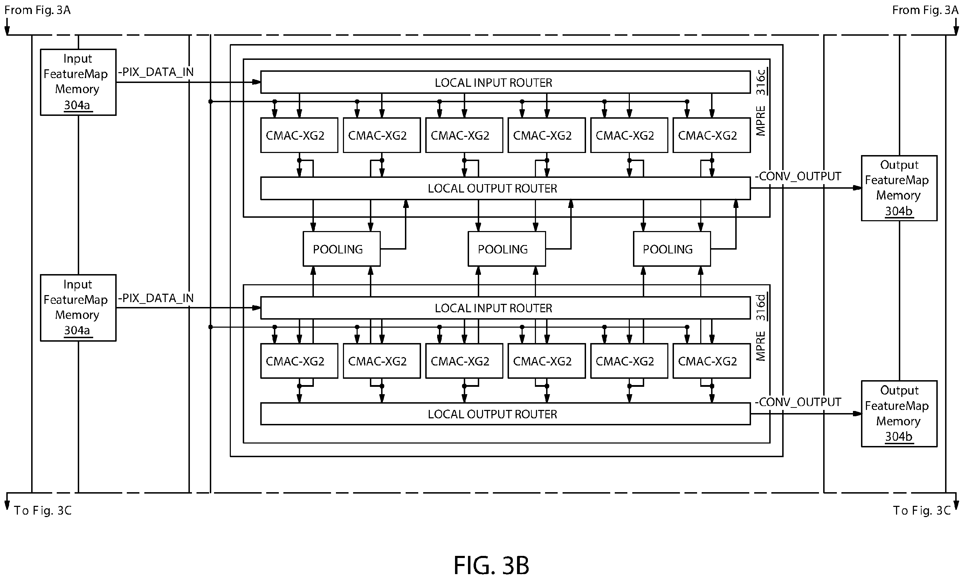

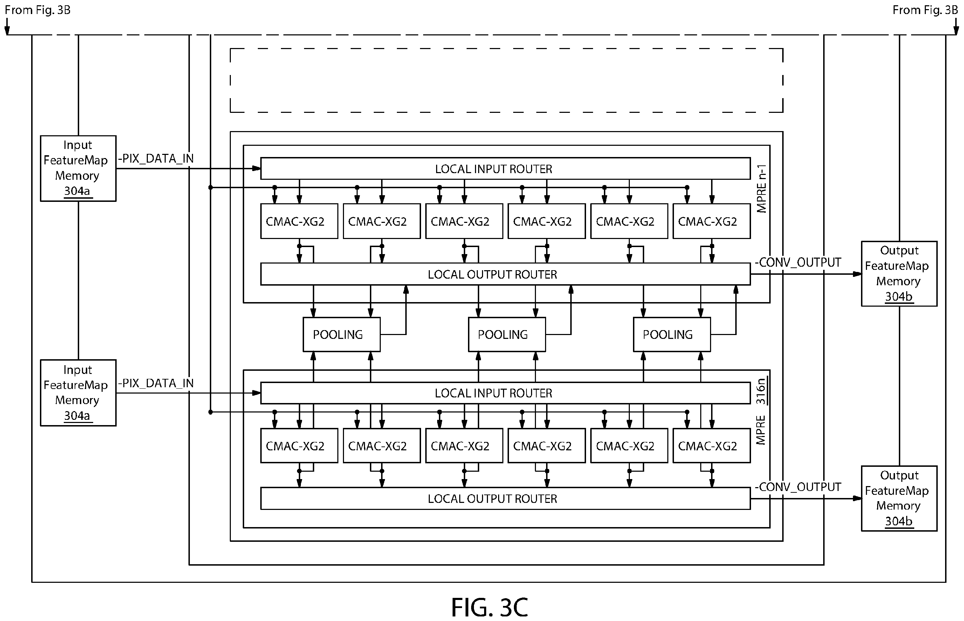

The reconfigurable convolution cluster engine 302 shown in FIG. 3 performs various functions including loading Input feature map pixel data (from input line buffer) into the local input router, loading the local input router with input feature map data in parallel to CMAC-XG2 element, loading kernel value to all the CMAC-XG2 elements in each of the MPREs 316, controlling the configurable pooling elements when pooling layer is enabled from the CNN main controller, controlling the CMAC-XG2 instances for parallel convolution for one full feature map, moving the convoluted data to the output line buffer via the local output router, interfacing with CNN main controller 310 for centralized control to all MPRE 316 and monitoring the convolution processing status from all MPRE 316.

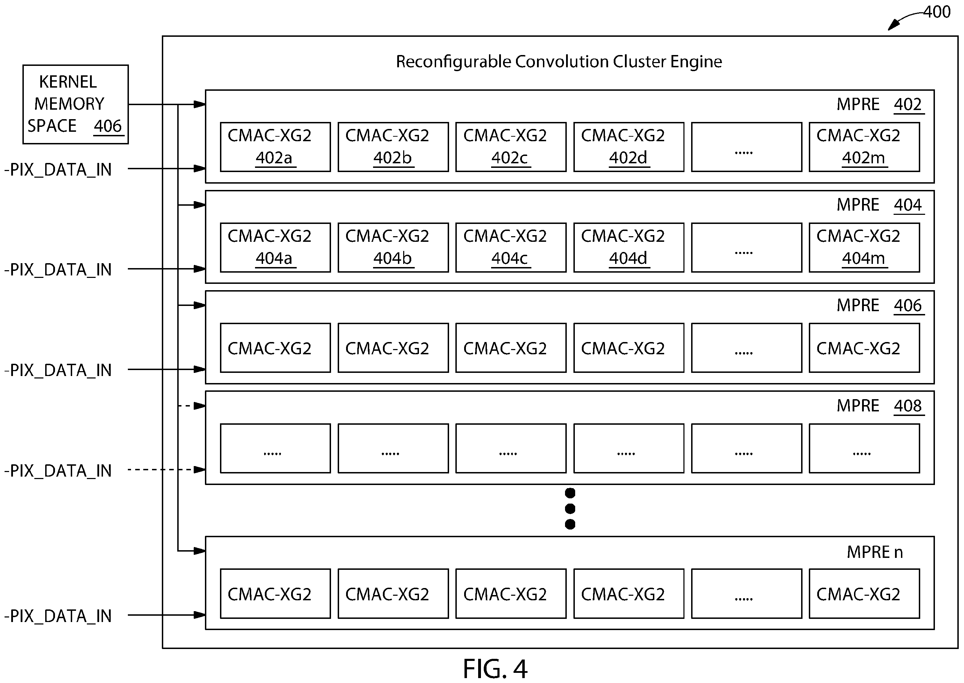

Referring now to FIG. 4, an exemplary parallel feature map processing in the reconfigurable convolutional cluster engine 400 illustrated, in accordance with some embodiments of the present disclosure. FIG. 4 is explained in conjunction with FIGS. 1-3. The reconfigurable convolutional cluster engine 400 may include MPRE 402, MPRE 404, MPRE 406, MPRE 408, MPRE n. Each of the MPREs may include multiple CMAC-XG2 elements. For example, the MPRE 402 may include CMAC-XG2 elements 402a to 402m, and MPRE 404 may include CMAC-XG2 elements 404a to 404m. The CMAC-XG2 elements may perform convolution for different kernel size (i.e., 3 X 3, 5 X 5, 7 X 7, and 9 X 9). Further, the concurrent convolution may be achieved by allocating CMAC-XG2 element which is equal to the maximum size of a feature map. Each of the CMAC-XG2 elements in each MPRE may run in parallel. It should be noted that the MPREs run in parallel and each MPRE may access dedicated line buffers. In some embodiments, the CMAC-XG2 elements may operate with same kernel value. In some other embodiments, the CMAC-XG2 elements may operate with different kernel value.

For example, if the image size (i.e., input feature map size) is 800 X 480, then the number of CMAC-XG2 may be 320,000 and there may be 480 MPRE instances. If the kernel size is 3 X 3, then each CMAC-XG2 may operate on 3 X 3 image size on the input feature map. Since the same kernel values are loaded into all the CMAC-XG2, one feature map processing may be done in parallel. The host processor may load all the kernels values from the related current convolution layer to the kernel memory space 406.

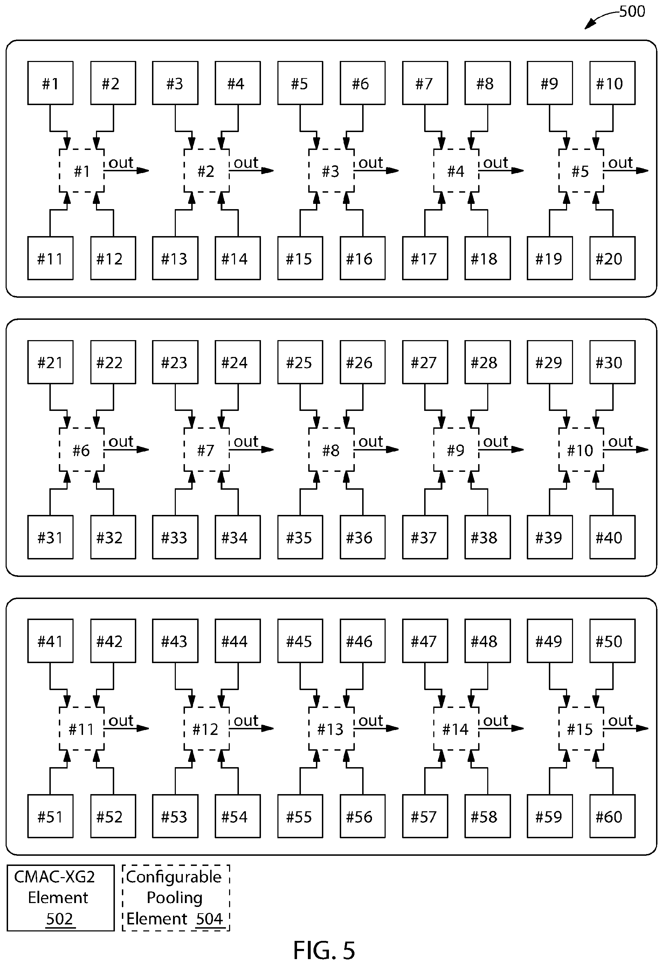

Referring now to FIG. 5, logical connection between Convolution Multiply and Accumulate-XtendedGen2 (CMAC-XG2) elements 502 and pooling (CPOOL) elements 504 is illustrated, in accordance with some embodiments of the present disclosure. FIG. 5 is explained in conjunction with FIGS. 1-4. The CPOOL elements 504 may perform maximum pooling function of '2 X 2' or '3 X 3', based on the user configuration settings from the host processor. The CPOOL elements 504 may run in the pipeline by using convoluted output generated from the CMAC-XG2 elements. For example, if maximum pooling function 2 X 2 is configured the CMAC-XG2 element (#1), CMAC-XG2 element (#2), CMAC-XG2 element (#11) and CMAC-XG2 element (#12) may be connected to the CPOOL (#1) as shown in the FIG. 5. When the CPOOL elements are enabled by the CNN main controller for the respective convolution layers, the CPOOL elements take the convoluted output from 4 respective CMAC-XG2 elements, compute the maximum value, and send the output to the local output router.

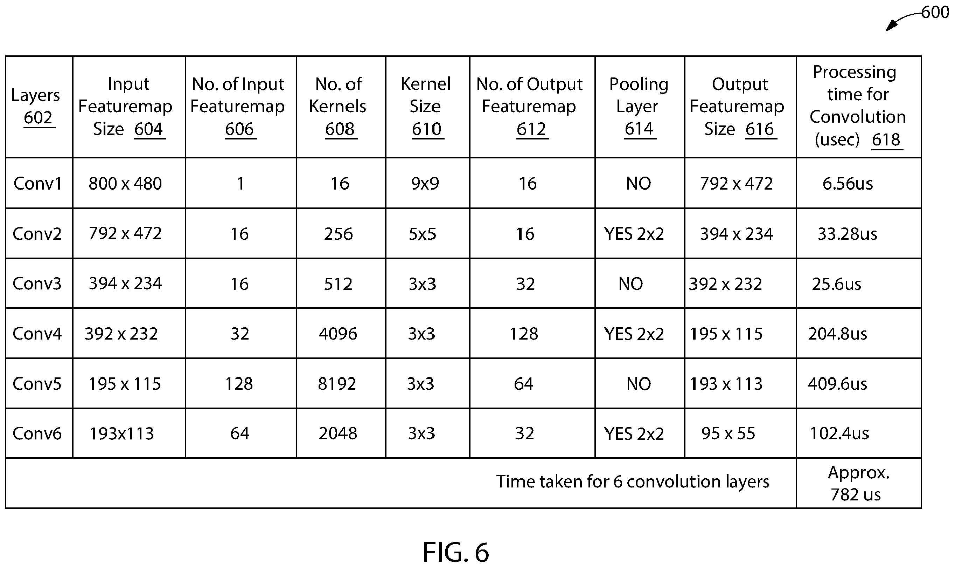

Referring now to FIG. 6, an exemplary table 600 for determining approximate processing time for a six layered CNN network while using the CNN acceleration device 100 is illustrated, in accordance with some embodiments of the present disclosure. FIG. 6 is explained in conjunction with FIGS. 1-5. It should be noted that the six layered CNN is considered for the timing computation analysis. The table 600 includes layers 602 (for example, conv1 to conv6). The table 600 further includes input feature map size 604, number of input feature map 606, number of kernels 608, kernel size 610, number of output feature map 612, presence of pooling layer 614, output feature map size 616, processing time for convolution 618, corresponding to each of the layer 602.

The table 600 may be generated based on some assumptions. For example, consider that clock frequency for a reconfigurable convolution cluster engine may be 200 MHz which is equivalent to 5 ns, maximum pooling function used and size may be 2 X 2, stride used for convolution may be '1', one row and column may be trimmed-off when pooled output size is odd, input feature map memory read and output feature map memory write latency may not be considered, and host processor data scheduling, the data read and write to external DRAM may not be considered.

As illustrated in FIG. 6, the input feature map size 604 corresponding to the layers 602 (i.e., conv1 to conv6) are '800 X 480', '792 X 472', '394 X 234', '392 X 232', '1951 X 115', '193 X 113', respectively. Further, respective number of input feature map 606 corresponding to the layers 602 (i.e., conv1 to conv6) are '1', '16', '16', '32', '128', '64', and respective number of kernels 606 corresponding to each of the layers 602 are '16', '256', '512', '4096', '8192', '2048'. Further, kernel size 608 corresponding to each of the layers 602 are '9 X 9', '5 X 5', '3 X 3', '3 X 3', '3 X 3', '3 X 3', and output feature map 610 corresponding to each of the layers 602 are '16', '16', '32', '128', '64', '32', respectively. Similarly, presence of pooling layer 612 corresponding to each of the layers 602 is also shown in the table 600. For example, pooling layer may be absent in layers conv1, conv3, and conv5, and present in conv2, conv4, and conv6 with maximum pooling function 2X2. Further, for example, output feature map size corresponding to conv1 is 792 X 472. Similarly, output feature map size corresponding to other layers is also shown in table 600.

The processing time for convolution may be determined as per equation (1), given below:

$$\text{Processing time for convolution} = (\text{Kernel size} + \text{Stride used for convolution}) \text{ X}$$

$$(\text{1/Clock frequency}) \text{ X } (\text{Number of kernels}) \tag{1}$$

By way of an example, processing time for conv1 may be calculated as follows:

Kernel size for conv1 = 9 × 9 = 81
Stride used for convolution = 1

$$\text{Number of cycles} = \text{Kernel size} + \text{Stride used for convolution} \tag{2}$$

Therefore, number of cycles for conv1 = 81 + 1 = 82 cycles

Clock frequency = 200 MHz
Therefore, 1/Clock frequency = 5 ns

$$\text{Processing time for 1 output feature map} = \text{Number of cycles X 1/Clock}$$

$$\text{frequency} \tag{3}$$

Therefore, processing time for 1 output feature map by conv1 = 82 × 5 = 0.41 us

Total convolution processing time for a layer = Processing time for 1 output feature map X number of output feature maps
Number of output feature maps for conv1 = 16

Therefore, convolution processing time for conv1 = 0.41 X 16 = 6.56 us

Similarly, processing time may be calculated for other convolutional layers based on the equation (1).

The processing time corresponding to conv2 is 33.28 us (i.e., 5x5 = 25; 25 + 1 = 26 cycles; 26 x 5 ns = 0.13 us for 1 output feature map; 0.13 us x 256 = 33.28 us for 16 output feature maps).

The processing time corresponding to conv3 is 25.6 us (i.e., 3x3 = 9; 9 + 1 = 10 cycles; 10 x 5 ns = 0.05 us for 1 output feature map; 0.05 us x 512 = 25.6 us for 32 output feature maps).

The processing time corresponding to conv4 is 204.8 us (i.e., 3 x 3 = 9; 9 + 1 = 10 cycles; 10 x 5 ns = 0.05 us for 1 output feature map; 0.05 us x 4096 = 204.8 us for 128 output feature maps).

The processing time corresponding to conv5 is 409.6 us (i.e., 3x3 = 9; 9 + 1 = 10 cycles; 10 x 5 ns = 0.05 us for 1 output feature map; 0.05 us x 8192 = 409.6 us for 64 output feature maps).

The processing time corresponding to conv6 is 102.4 us (i.e., 3 x 3 = 9 + 1 = 10 cycle x 5 ns = 0.05 us for 1 output feature map; 0.05us x 2048 = 102.4us for 32 output feature maps).

Thus, total processing time taken for the six convolutional layers (i.e., summation of the processing time taken by the six convolutional layers) may be '782 us' approximately.

It should be noted that the CNN acceleration device 100 may be implemented in programmable hardware devices such as programmable gate arrays, programmable array logic, programmable logic devices, or the like. Alternatively, the CNN acceleration device 100 may be implemented in software for execution by various types of processors. An identified engine/module of executable code may, for instance, include one or more physical or logical blocks of computer instructions which may, for instance, be organized as a component, module, procedure, function, or other construct. Nevertheless, the executables of an identified engine/module need not be physically located together but may include disparate instructions stored in different locations which, when joined logically together, comprise the identified engine/module and achieve the stated purpose of the identified engine/module. Indeed, an engine or a module of executable code may be a single instruction, or many instructions, and may even be distributed over several different code segments, among different applications, and across several memory devices.

As will be appreciated by one skilled in the art, a variety of processes may be employed for feature extraction from an input image from a plurality of images in an image sensor pipeline. For example, the exemplary CNN acceleration device 100 may extract features from the input image, by the process discussed herein. In particular, as will be appreciated by those of ordinary skill in the art, control logic and/or automated routines for performing the techniques and steps described herein may be implemented by the CNN acceleration device 100 either by hardware, software, or combinations of hardware and software. For example, suitable code may be accessed and executed by the one or more processors on the system and associated CNN acceleration device 100 to perform some or all of the techniques described herein. Similarly, application specific integrated circuits (ASICs) configured to perform some or all the processes described herein may be included in the one or more processors on the system 200 and the associated CNN acceleration device 100.

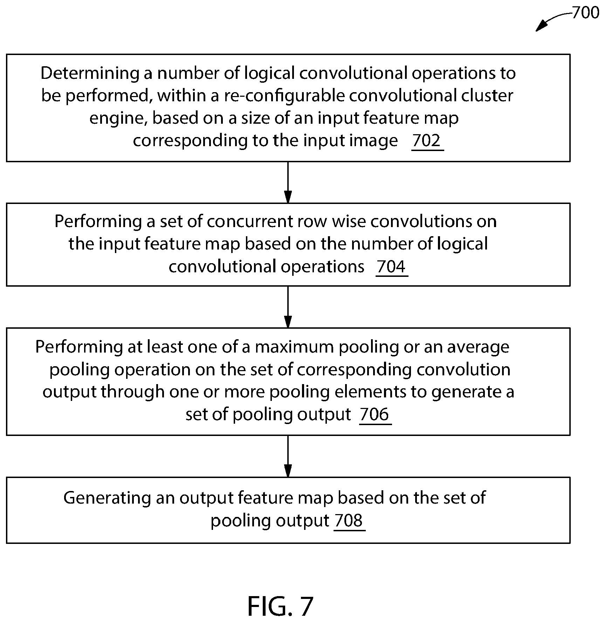

Referring now to FIG.7, a flowchart 700 of an exemplary process of feature extraction from an input image from a plurality of images in an image sensor pipeline is depicted, in accordance with some embodiments of the present disclosure. Each step of the process may be executed by a CNN acceleration device (same as the CNN acceleration device 100. FIG. 7 is explained in conjunction with FIGS. 1-6.

At step 702, a number of logical convolutional operations to be performed within a reconfigurable convolutional cluster engine may be determined using a convolutional operation determination module (similar to the convolutional operation determination module 104). The reconfigurable convolutional cluster engine may include an input feature map memory and the output feature map memory. The input feature map memory may be used to store the input image. The output feature map memory may store output feature map. The reconfigurable convolution cluster engine may also include a kernel memory space capable for holding a set of network parameters associated to a network layer. The reconfigurable convolution cluster engine may include a kernel controller to enable the parallel convolution operation. In order to enable the parallel convolution operation, the kernel controller may load the network parameters into the one or more CMAC-XG2 elements simultaneously.

The reconfigurable convolution cluster engine may further include a set of MPREs. Each MPRE may be configured to perform the concurrent row wise convolution operation on the input feature map. The number of MPRE may be based on a number of lines in the input feature map.

It should be noted that each of the set of MPREs may further include a set of Convolution Multiply and Accumulate-XtendedGen2 (CMAC-XG2) elements. Each CMAC-XG2 may be configured to perform a convolution operation corresponding to the pre-determined kernel size. The number of CMAC-XG2 may be based on a number of pixels in each of the line in the input feature map.

Moreover, each of the set of CMAC-XG2 may include at least one of a Double Module Redundancy (DMR) or a Triple-Module Redundancy (TMR). In some embodiments, the each of the set of CMAC-XG2 may be validated through safety diagnostics registers and Built-In Self-Test (BIST). Further, the number of logical convolutional operation may be determined based on a size of an input feature map corresponding to the input image.

Further, at step 704, a set of concurrent row wise convolutions on the input feature map may be performed using a concurrent convolution performing module (same as the concurrent convolution performing module 106). To perform the set of concurrent row wise convolutions the number of logical convolutional operations may be considered. It should be noted that each of the set of concurrent row wise convolutions may include a set of convolution operations corresponding to a pre-determined kernel size. Thus, a set of corresponding convolution output may be generated. Additionally, each of the set of convolution operations may be one of a 1D convolution, a 2D convolution, or a 3D convolution. Moreover, each of the set of convolution operations may be at least one of a dilation convolution, a fast convolution, or a functional safety convolution. This may be based on a user-defined configuration of the reconfigurable convolutional cluster engine.

The user-defined configuration, for the dilation convolution, may include a dilation rate of the input feature map. The fast convolution may include employing a convolution grid engine (CGRID). The functional safety convolution may include enabling at least one of a double-module redundancy (DMR), a triple-module redundancy (TMR), and one or more diagnostic features.

At step 706, at least one of a maximum pooling or an average pooling operation may be performed on the set of corresponding convolution output using a pooling module (same as the pooling module 108). The pooling module may include one or more pooling (CPOOL) elements. The pooling operation may be performed through the one or more pooling (CPOOL) elements to generate a set of pooling output.

At step 708, an output feature map based on the set of pooling output may be generated using feature map generation module (such as the feature map generation module 110). At least one of the output feature map or the input image may be transmitted, based on a user-defined mode. The output feature map may be transmitted for subsequent storage or processing prior to performing feature extraction from a next input image from the plurality of images in the image sensor pipeline.

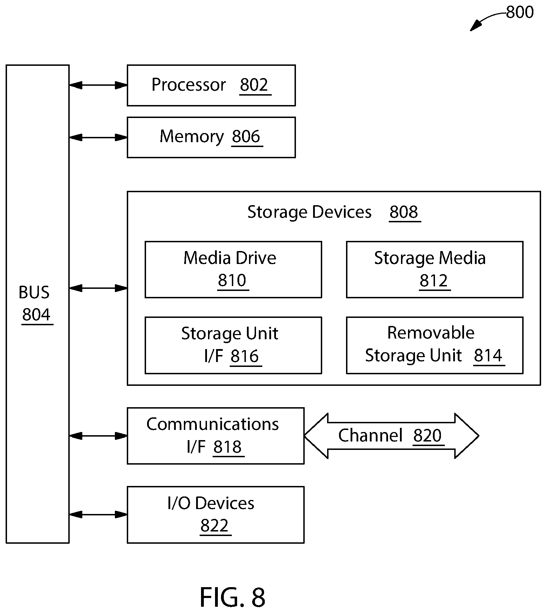

The disclosed methods and systems may be implemented on a conventional or a general-purpose computer system, such as a personal computer (PC) or server computer. Referring now to FIG. 8, an exemplary computing system 800 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 800 may represent, for example, a user device such as a desktop, a laptop, a mobile phone, personal entertainment device, DVR, and so on, or any other type of special or general-purpose computing device as may be desirable or appropriate for a given application or environment. The computing system 800 may include one or more processors, such as a processor 802 that may be implemented using a general or special purpose processing engine such as, for example, a microprocessor, microcontroller or other control logic. In this example, the processor 802 is connected to a bus 802 or other communication medium. In some embodiments, the processor 802 may be an AI processor, which may be implemented as a Tensor Processing Unit (TPU), or a graphical processor unit, or a custom programmable solution Field-Programmable Gate Array (FPGA).

The computing system 800 may also include a memory 806 (main memory), for example, Random Access Memory (RAM) or other dynamic memory, for storing information and instructions to be executed by the processor 802. The memory 806 also may be used for storing temporary variables or other intermediate information during execution of instructions to be executed by the processor 802. The computing system 800 may likewise include a read only memory ("ROM") or other static storage device coupled to bus 804 for storing static information and instructions for the processor 802.

The computing system 800 may also include a storage device 808, which may include, for example, a media drives 810 and a removable storage interface. The media drive 810 may include a drive or other mechanism to support fixed or removable storage media, such as a hard disk drive, a floppy disk drive, a magnetic tape drive, an SD card port, a USB port, a micro USB, an optical disk drive, a CD or DVD drive (R or RW), or other removable or fixed media drive. A storage media 812 may include, for example, a hard disk, magnetic tape, flash drive, or other fixed or removable medium that is read by and written to by the media drive 810. As these examples illustrate, the storage media 812 may include a computer-readable storage medium having stored there in particular computer software or data.

In alternative embodiments, the storage devices 808 may include other similar instrumentalities for allowing computer programs or other instructions or data to be loaded into the computing system 800. Such instrumentalities may include, for example, a removable storage unit 814 and a storage unit interface 816, such as a program cartridge and cartridge interface, a removable memory (for example, a flash memory or other removable memory module) and memory slot, and other removable storage units and interfaces that allow software and data to be transferred from the removable storage unit 814 to the computing system 800.

The computing system 800 may also include a communications interface 818. The communications interface 818 may be used to allow software and data to be transferred between the computing system 800 and external devices.

Examples of the communications interface 818 may include a network interface (such as an Ethernet or other NIC card), a communications port (such as for example, a USB port, a micro USB port), Near Field Communication (NFC), etc. Software and data transferred via the communications interface 818 are in the form of signals which may be electronic, electromagnetic, optical, or other signals capable of being received by the communications interface 818. These signals are provided to the communications interface 818 via a channel 820. The channel 820 may carry signals and may be implemented using a wireless medium, wire or cable, fiber optics, or other communications medium. Some examples of the channel 820 may include a phone line, a cellular phone link, an RF link, a Bluetooth link, a network interface, a local or wide area network, and other communications channels.

The computing system 800 may further include Input/Output (I/O) devices 822. Examples may include, but are not limited to a display, keypad, microphone, audio speakers, vibrating motor, LED lights, etc. The I/O devices 822 may receive input from a user and also display an output of the computation performed by the processor 802. In this document, the terms "computer program product" and "computer-readable medium" may be used generally to refer to media such as, for example, the memory 812, the storage devices 808, the removable storage unit 814, or signal(s) on the channel 820. These and other forms of computer-readable media may be involved in providing one or more sequences of one or more instructions to the processor 802 for execution. Such instructions, generally referred to as "computer program code" (which may be grouped in the form of computer programs or other groupings), when executed, enable the computing system 800 to perform features or functions of embodiments of the present invention.

In an embodiment where the elements are implemented using software, the software may be stored in a computer-readable medium and loaded into the computing system 800 using, for example, the removable storage unit 814, the media drive 810 or the communications interface 818. The control logic (in this example, software instructions or computer program code), when executed by the processor 802, causes the processor 802 to perform the functions of the invention as described herein.

Thus, the present disclosure may overcome drawbacks of traditional systems discussed before. The disclosed method and system in the present disclosure may enable feature extraction in the image sensor pipeline based on the user configuration (i.e., convolution mode setting). Only extracted features, video data and extracted features, and/or the video data with resized resolution may be transmitted from the imager. Further, for deeper networks, the computation element may be reused with better utilization of on-chip hardware resources. For the deeper layers, when the feature map size shrinks, leaf accelerator elements may be grouped to increase the throughput. Further, the present disclosure allows to process the pixel data in the image sensor pipeline. And, for the performance demanding application on-demand fast convolution mode may be enabled. Additionally, extracted feature or the classified output alone may be sent from the image sensor chipset. This may be helpful for multiple remote camera applications and solutions. Moreover, the reconfigurable convolution cluster engine allows to instantiate multiple CMAC-XG2 element instances using MPRE example in a grid topology which help in multiple input feature maps processing with different filter kernel and the solution may be extended to any image sensing device (such as medical, automotive, satellite, and the like). Also, it may be integrated with an audio sensor.

The reconfigurable convolution cluster engine helps in full parallel feature maps processing with different filter kernels. Further, configurable pooling option supports pooling functions 2 X 2 or 3 X 3 in an integrated convolution pipeline. The disclosure provides user configurable option to enable or disable built-in functional safety mechanisms which is more suitable for safety critical application. The functional safety mechanism enables to address the functional safety failures like SEU/SET fault. The disclosure further includes fully reconfigurable CMAC-XG2 elements that may support dilation convolution and handle both 2D and 3D convolutions for various kernel sizes of 3 X 3, 5 X 5, 7 X 7 and 9X9 (common in large networks). Further, the localized kernel memory space enables near memory computation for reconfigurable convolution cluster engine, and helps in reducing the external memory bandwidth and host overhead. The disclosure provides user configurable fully connected layer processing (1D multiplication and accumulation using the flattened data).

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, although individually listed, a plurality of means, elements or process steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

**Claims**

1. A method of feature extraction from an input image from a plurality of images in an image sensor pipeline, the method comprising:

   determining, by the CNN acceleration device, a number of logical convolutional operations to be performed, within a reconfigurable convolutional cluster engine, based on a size of an input feature map corresponding to the input image;

   performing, by the CNN acceleration device, a set of concurrent row wise convolutions on the input feature map, based on the number of logical convolutional operations, wherein each of the set of concurrent row wise convolutions comprises a set of convolution operations corresponding to a pre-determined kernel size so as to generate a set of corresponding convolution output, wherein each of the set of convolution operations is one of a one-dimensional (1D) convolution, a two-dimensional (2D) convolution, or a three-dimensional (3D) convolution, and wherein each of the set of convolution operations is at least one of a dilation convolution, a fast convolution, or a functional safety convolution based on a user-defined configuration of the reconfigurable convolutional cluster engine;

   performing, by the CNN acceleration device, at least one of a maximum pooling or an average pooling operation on the set of corresponding convolution output through one or more pooling elements to generate a set of pooling output; and

   generating, by the CNN acceleration device, an output feature map based on the set of pooling output, wherein at least one of the output feature map or the input image is transmitted, based on a user-defined mode, for subsequent storage or processing prior to performing feature extraction from a next input image from the plurality of images in the image sensor pipeline.

2. The method of claim 1, wherein the reconfigurable convolution cluster engine comprises a set of Mini Parallel Rolling Engines (MPREs), wherein each MPRE is configured to perform the concurrent row wise convolution operation on the input feature map, wherein the number of MPRE is based on a number of lines in the input feature map, wherein each of the set of MPREs comprises a set of Convolution Multiply and Accumulate-XtendedGen2 (CMAC-XG2) elements, wherein each CMAC-XG2 is configured to perform a convolution operation corresponding to the pre-determined kernel size, wherein the number of CMAC-XG2 is based on a number of pixels in each of the line in the input feature map, and wherein each of the set of CMAC-XG2 comprises at least one of a Double Module Redundancy (DMR) or a Triple-Module Redundancy (TMR).

3. The method of claim 2, further comprising validating the each of the set of CMAC-XG2 through safety diagnostics registers and Built-In Self-Test (BIST).

4. The method of claim 1, wherein the reconfigurable convolution cluster engine further comprises an input feature map memory to store the input image and an output feature map memory to store the output feature map.

5. The method of claim 1, wherein the reconfigurable convolution cluster engine comprises a kernel memory space capable for holding a set of network parameters associated to a network layer.

6. The method of claim 1, wherein the reconfigurable convolution cluster engine comprises a kernel controller to enable the parallel convolution operation by loading the network parameters into the one or more CMAC-XG2 elements simultaneously.

7. The method of claim 1, wherein:

   the user-defined configuration, for the dilation convolution, comprises a dilation rate of the input feature map;
   the fast convolution comprises employing a convolution grid engine (CGRID);
   the functional safety convolution comprises enabling at least one of a double-module redundancy (DMR), a triple-module redundancy (TMR), and one or more diagnostic features.

8. A system for feature extraction from an input image from a plurality of images, the system comprising:

a processor; and
a memory communicatively coupled to the processor, wherein the memory stores processor-executable instructions, which, on execution, cause the processor to:

determine a number of logical convolutional operations to be performed, within a reconfigurable convolutional cluster engine, based on a size of an input feature map corresponding to the input image;
perform a set of concurrent row wise convolutions on the input feature map, based on the number of logical convolutional operations, wherein each of the set of concurrent row wise convolutions comprises a set of convolution operations corresponding to a pre-determined kernel size so as to generate a set of corresponding convolution output, wherein each of the set of convolution operations is one of a one-dimensional (1D) convolution, a two-dimensional (2D) convolution, or a three-dimensional (3D) convolution, and wherein each of the set of convolution operations is at least one of a dilation convolution, a fast convolution, or a functional safety convolution based on a user-defined configuration of the reconfigurable convolutional cluster engine;
perform at least one of a maximum pooling or an average pooling operation on the set of corresponding convolution output through one or more pooling elements to generate a set of pooling output; and
generate an output feature map based on the set of pooling output, wherein at least one of the output feature map or the input image is transmitted, based on a user-defined mode, for subsequent storage or processing prior to performing feature extraction from a next input image from the plurality of images in the image sensor pipeline.

9. The system of claim 8, wherein the reconfigurable convolution cluster engine comprises a set of Mini Parallel Rolling Engines (MPREs), wherein each MPRE is configured to perform the concurrent row wise convolution operation on the input feature map, wherein the number of MPRE is based on a number of lines in the input feature map, wherein each of the set of MPREs comprises a set of Convolution Multiply and Accumulate-XtendedGen2 (CMAC-XG2) elements, wherein each CMAC-XG2 is configured to perform a convolution operation corresponding to the pre-determined kernel size, wherein the number of CMAC-XG2 is based on a number of pixels in each of the line in the input feature map, and wherein each of the set of CMAC-XG2 comprises at least one of a Double Module Redundancy (DMR) or a Triple-Module Redundancy (TMR).

10. The system of claim 9, wherein the processor-executable instructions further cause the processor to validate the each of the set of CMAC-XG2 through safety diagnostics registers and Built-In Self-Test (BIST).

11. The system of claim 8, wherein the reconfigurable convolution cluster engine further comprises an input feature map memory to store the input image and an output feature map memory to store the output feature map.

12. The system of claim 8, wherein the reconfigurable convolution cluster engine comprises a kernel memory space capable for holding a set of network parameters associated to a network layer.

13. The system of claim 8, wherein the reconfigurable convolution cluster engine comprises a kernel controller to enable the parallel convolution operation by loading the network parameters into the one or more CMAC-XG2 elements simultaneously

14. The system of claim 8, wherein:

the user-defined configuration, for the dilation convolution, comprises a dilation rate of the input feature map;
the fast convolution comprises employing a convolution grid engine (CGRID);
the functional safety convolution comprises enabling at least one of a double-module redundancy (DMR), a triple-module redundancy (TMR), and one or more diagnostic features.

CNN Acceleration Device  100

Input Image
102

Convolutional
Operation
Determination
Module 104

Concurrent
Convolution
Performing
Module 106

Feature Map
Generation
Module 110

Pooling
Module 108

Output
Feature Map
112

FIG. 1

FIG. 2

FIG. 3A

EP 4 336 410 A1

FIG. 3B

FIG. 3C

FIG. 4

FIG. 5

| Layers 602 | Input Featuremap Size 604 | No. of Input Featuremap 606 | No. of Kernels 608 | Kernel Size 610 | No. of Output Featuremap 612 | Pooling Layer 614 | Output Featuremap Size 616 | Processing time for Convolution (usec) 618 |
|---|---|---|---|---|---|---|---|---|
| Conv1 | 800 x 480 | 1 | 16 | 9x9 | 16 | NO | 792 x 472 | 6.56us |
| Conv2 | 792 x 472 | 16 | 256 | 5x5 | 16 | YES 2x2 | 394 x 234 | 33.28us |
| Conv3 | 394 x 234 | 16 | 512 | 3x3 | 32 | NO | 392 x 232 | 25.6us |
| Conv4 | 392 x 232 | 32 | 4096 | 3x3 | 128 | YES 2x2 | 195 x 115 | 204.8us |
| Conv5 | 195 x 115 | 128 | 8192 | 3x3 | 64 | NO | 193 x 113 | 409.6us |
| Conv6 | 193x113 | 64 | 2048 | 3x3 | 32 | YES 2x2 | 95 x 55 | 102.4us |
| | | | | | Time taken for 6 convolution layers | | | Approx. 782 us |

FIG. 6

700

Determining a number of logical convolutional operations to be performed, within a reconfigurable convolutional cluster engine, based on a size of an input feature map corresponding to the input image   702

Performing a set of concurrent row wise convolutions on the input feature map based on the number of logical convolutional operations   704

Performing at least one of a maximum pooling or an average pooling operation on the set of corresponding convolution output through one or more pooling elements to generate a set of pooling output   706

Generating an output feature map based on the set of pooling output 708

FIG. 7

—800

FIG. 8

Europäisches
Patentamt

European
Patent Office

Office européen
des brevets

# EUROPEAN SEARCH REPORT

Application Number

EP 23 15 4883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 961 509 A1 (HCL TECHNOLOGIES LTD [IN]) 2 March 2022 (2022-03-02) * page 1 – page 13 * | 1-14 | INV. G06N3/0464 G06N3/063 G06T1/00 |
| A | ROSHANSHAH MOHAMMAD RASOUL ET AL: "Online Testing of a Row-Stationary Convolution Accelerator", 2021 IEEE EUROPEAN TEST SYMPOSIUM (ETS), IEEE, 24 May 2021 (2021-05-24), pages 1-2, XP033935757, DOI: 10.1109/ETS50041.2021.9465392 [retrieved on 2021-06-24] * figures 3, 12 * * sections I-V * | 1-14 | ADD. G06F11/00 |
| A | Li Du ET AL: "A Reconfigurable Streaming Deep Convolutional Neural Network Accelerator for Internet of Things", , 8 July 2018 (2018-07-08), XP055569293, DOI: 10.1109/TCSI.2017.2735490 Retrieved from the Internet: URL:https://arxiv.org/ftp/arxiv/papers/1707/1707.02973.pdf [retrieved on 2019-03-14] * page 1 – page 2 * | 1-14 | |

TECHNICAL FIELDS
SEARCHED      (IPC)

G06N
G06V
G06F
G06T

The present search report has been drawn up for all claims

| Place of search | Date of completion of the search | Examiner |
|---|---|---|
| The Hague | 27 June 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 4883

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2023

| Patent document cited in search report | Publication date | Patent family member(s) | Publication date |
|---|---|---|---|
| EP 3961509 A1 | 02-03-2022 | EP 3961509 A1 | 02-03-2022 |
|  |  | US 2022012513 A1 | 13-01-2022 |

EPO FORM P0459

For more details about this annex : see Official Journal of the European Patent Office, No. 12/82